# EUROPEAN PATENT APPLICATION

(11) **EP 4 486 003 A1**
(43) Date of publication of application: **01.01.2025**
(21) Application number: 23784269.5
(22) Date of filing: 04.04.2023
(51) Int. Cl.: H04W 36/00

(54) **COMMUNICATION METHOD AND APPARATUS**

(30) Priority: 08.04.2022 CN 202210367266; 03.08.2022 CN 202210927988
(71) Applicant: Huawei Technologies Co., Ltd., Shenzhen, Guangdong 518129 (CN)
(72) Inventor: PAN, Xiaogang, Shenzhen, Guangdong 518129 (CN); XIE, Xi, Shenzhen, Guangdong 518129 (CN); LI, Hong, Shenzhen, Guangdong 518129 (CN); SUN, Bing, Shenzhen, Guangdong 518129 (CN); WANG, Rundong, Shenzhen, Guangdong 518129 (CN)
(74) Representative: Pfenning, Meinig & Partner mbB
(86) International application number: PCT/CN2023/086193
(87) International publication number: WO 2023/193706

(57) **Abstract**

Embodiments of this application disclose a communication method and apparatus. The method includes: A terminal device receives a first message from an access network device, where the first message indicates the terminal device to be handed over to a target cell or to be redirected to a target frequency. If the handover to the target cell fails or the redirection to the target frequency fails, the terminal device searches for an acceptable cell or a suitable cell. According to embodiments of this application, an emergency call delay can be reduced.

## Description

This application claims priorities to Chinese Patent Application No. 202210367266.4, filed with the China National Intellectual Property Administration on April 8, 2022 and entitled "COMMUNICATION METHOD AND APPARATUS", and to Chinese Patent Application 202210927988.0, filed with the China National Intellectual Property Administration on August 3, 2022 and entitled "COMMUNICATION METHOD AND APPARATUS", both of which are incorporated herein by reference in their entireties.

### TECHNICAL FIELD

This application relates to the field of communication technologies, and in particular, to a communication method and apparatus.

### BACKGROUND

Currently, a 5th generation (5th Generation, 5G) mobile communication technology network supports two manners for an emergency call. In the first manner, the 5G network supports an emergency service, and the emergency call can be completed via the 5G network. In the second manner, the 5G network supports an emergency services fallback (emergency services fallback, ESFB) procedure, and before the emergency call, fallback to a 4th generation (4th Generation, 4G) mobile communication technology network is first performed, and the emergency call service is completed via the 4G network. However, for the ESFB procedure, after handover fails or redirection fails, user equipment (user equipment, UE) needs to return to 5G to perform a re-establishment procedure. As a result, duration of obtaining the emergency service is delayed, causing low communication efficiency.

### SUMMARY

Embodiments of this application provide a communication method and apparatus, to reduce an emergency call delay.

According to a first aspect, an embodiment of this application provides a communication method, including: A terminal device receives a first message from an access network device, where the first message indicates the terminal device to be handed over to a target cell or to be redirected to a target frequency. If the handover to the target cell fails or the redirection to the target frequency fails, the terminal device searches for an acceptable cell or a suitable cell. After the handover/the redirection fails, based on emergency call procedure processing, if finding either the acceptable cell or the suitable cell, the UE immediately establishes an emergency bearer to obtain an emergency service, to reduce an emergency call delay.

In a possible design, the first message includes first indication information. Alternatively, the first message includes second indication information but includes no first indication information. Alternatively, the first message includes neither first indication information nor second indication information. The first indication information indicates emergency call fallback, and the second indication information indicates voice fallback. The UE determines, depending on whether the first message carries the first indication information and the second indication information, whether an ESFB procedure needs to be completed currently. In this way, after the handover fails or the redirection fails, based on the emergency call procedure processing, if finding any 4G cell supporting an emergency service, the UE immediately establishes an emergency bearer to obtain the emergency service, to reduce an emergency call delay.

In another possible design, the first message is one of the following: a mobility from new radio NR command message, a mobility from evolved universal terrestrial radio access E-UTRA command message, a radio resource control RRC release message, or a radio resource control RRC reconfiguration message.

In another possible design, the terminal device has an ongoing emergency service, needs to perform the emergency service, goes on emergency services fallback, or needs to perform emergency services fallback. In the ESFB procedure, the UE determines that an ongoing emergency service exists. After the handover/the redirection fails, based on the emergency call procedure processing, if finding any 4G cell supporting an emergency service, the UE immediately establishes an emergency bearer to obtain the emergency service, to reduce an emergency call delay.

In another possible design, the terminal device initiates the emergency services fallback, or the terminal device initiates the emergency services fallback before receiving the first message.

In another possible design, an access stratum of the terminal device receives third indication information from an application layer and/or a non-access stratum of the terminal device, where the third indication information indicates that the ongoing emergency service exists. The application layer and/or the non-access stratum of the UE notifies, to the access stratum of the UE, that the ongoing emergency service exists, for determining that the ongoing emergency service exists.

In another possible design, the terminal device queries whether the terminal device has the ongoing emergency service; and if finding the ongoing emergency service, the terminal device determines that the ongoing emergency service exists. The access stratum of the UE queries an ESFB state of the application layer and/or the non-access stratum of the terminal device, to determine that the ongoing emergency service exists.

In another possible design, if the acceptable cell or the suitable cell that is found is a cell supporting an emergency service, the terminal device enters a radio resource control idle RRC_IDLE state; and/or if the acceptable cell or the suitable cell that is found is a cell supporting an emergency service, the terminal device performs the emergency service in the acceptable cell or the suitable cell. After the acceptable cell or the suitable cell is found, the RRC_IDLE state is entered, to save power. Then, the emergency service is performed in the acceptable cell or the suitable cell that is found, to reduce an emergency service delay.

In another possible design, if finding no acceptable cell or no suitable cell, the terminal device triggers a radio resource control RRC re-establishment procedure; or if finding no acceptable cell or no suitable cell, the terminal device performs RRC re-establishment by using configuration information of a source cell. When no acceptable cell or no suitable cell is found, the RRC re-establishment is performed, to ensure normal communication.

Alternatively, if finding no acceptable cell or no suitable cell, the terminal device searches for a cell of another standard. When no acceptable cell or no suitable cell is found, a cell of another standard is searched for, to ensure normal communication.

Alternatively, if no acceptable cell or no suitable cell is found, the access stratum of the terminal device sends fourth indication information to the application layer and/or the non-access stratum of the terminal device, where the fourth indication information indicates that no acceptable cell or no suitable cell is found.

In another possible design, the access stratum of the terminal device sends fifth indication information to the application layer and/or the non-access stratum of the terminal device, where the fifth indication information indicates that the handover to the target cell fails or the redirection to the target frequency fails.

According to a second aspect, an embodiment of this application provides a communication method, including: An access network device receives an emergency fallback request. The access network device sends a first message to a terminal device in response to the emergency fallback request, where
the first message includes first indication information;
the first message includes second indication information but includes no first indication information; or
the first message includes neither first indication information nor second indication information.

The first indication information indicates emergency call fallback, and the second indication information indicates voice fallback.

The UE determines, depending on whether the first message sent to the terminal device carries the first indication information and the second indication information, whether an ESFB procedure needs to be completed currently. In this way, after handover fails or redirection fails, based on emergency call procedure processing, if finding any 4G cell supporting an emergency service, the UE immediately establishes an emergency bearer to obtain the emergency service, to reduce an emergency call delay.

In another possible design, the first message is one of the following: a mobility from new radio NR command message, a mobility from evolved universal terrestrial radio access E-UTRA command message, a radio resource control RRC release message, or a radio resource control RRC reconfiguration message.

According to a third aspect, an embodiment of this application provides a communication apparatus, including:
a receiving module, configured to receive a first message from an access network device, where the first message indicates a terminal device to be handed over to a target cell or to be redirected to a target frequency; and
a processing module, configured to: if the handover to the target cell fails or the redirection to the target frequency fails, search for an acceptable cell or a suitable cell.

In a possible design, the first message includes first indication information;
the first message includes second indication information but includes no first indication information; or
the first message includes neither first indication information nor second indication information.

The first indication information indicates emergency call fallback, and the second indication information indicates voice fallback.

In another possible design, the first message is one of the following: a mobility from new radio NR command message, a mobility from evolved universal terrestrial radio access E-UTRA command message, a radio resource control RRC release message, or a radio resource control RRC reconfiguration message.

In another possible design, the processing module is further configured to determine that an ongoing emergency service exists.

In another possible design, the processing module is further configured to receive third indication information from an application layer and/or a non-access stratum of the terminal device through an access stratum of the terminal device, where the third indication information indicates that the ongoing emergency service exists.

In another possible design, the processing module is further configured to: query whether the terminal device has the ongoing emergency service; and if finding the ongoing emergency service, determine that the ongoing emergency service exists.

In another possible design, the processing module is further configured to: if the acceptable cell or the suitable cell that is found is a cell supporting an emergency service, enter a radio resource control idle RRC_IDLE state; and/or
the processing module is further configured to: if the acceptable cell or the suitable cell that is found is a cell supporting an emergency service, perform the emergency service in the acceptable cell or the suitable cell.

In another possible design, the processing module is further configured to:
if finding no acceptable cell or no suitable cell, trigger a radio resource control RRC re-establishment procedure;
if finding no acceptable cell or no suitable cell, perform RRC re-establishment by using configuration information of a source cell;
if finding no acceptable cell or no suitable cell, send fourth indication information to the application layer and/or the non-access stratum of the terminal device through the access stratum of the terminal device, where the fourth indication information indicates that no acceptable cell or no suitable cell is found; or
if finding no acceptable cell or no suitable cell, search for a cell of another standard.

In another possible design, the processing module is further configured to send fifth indication information to the application layer and/or the non-access stratum of the terminal device through the access stratum of the terminal device, where the fifth indication information indicates that the handover to the target cell fails or the redirection to the target frequency fails.

According to a fourth aspect, an embodiment of this application provides a communication apparatus, including:
a receiving module, configured to receive an emergency fallback request; and
a sending module, configured to send a first message to a terminal device in response to the emergency fallback request, where
the first message includes first indication information;
the first message includes second indication information but includes no first indication information; or
the first message includes neither first indication information nor second indication information.

The first indication information indicates emergency call fallback, and the second indication information indicates voice fallback.

In another possible design, the first message is one of the following: a mobility from new radio NR command message, a mobility from evolved universal terrestrial radio access E-UTRA command message, a radio resource control RRC release message, or a radio resource control RRC reconfiguration message.

According to a fifth aspect, an embodiment of this application provides a communication apparatus. The communication apparatus is configured to implement the method and the function that are performed by the terminal device in the first aspect, and is implemented by hardware/software. The hardware/software of the communication apparatus includes a module corresponding to the foregoing function.

According to a sixth aspect, an embodiment of this application provides a communication apparatus. The communication apparatus is configured to implement the method and the function that are performed by the access network device in the second aspect, and is implemented by hardware/software. The hardware/software of the communication apparatus includes a module corresponding to the foregoing function.

According to a seventh aspect, this application provides a communication apparatus. The apparatus may be a terminal device, an apparatus in the terminal device, or an apparatus that can be used together with the terminal device. The communication apparatus may alternatively be a chip system. The communication apparatus may perform the method according to the first aspect. A function of the communication apparatus may be implemented by hardware, or may be implemented by hardware executing corresponding software. The hardware or the software includes one or more modules corresponding to the function. The module may be software and/or hardware. For operations performed by the communication apparatus and beneficial effects thereof, refer to the method in the first aspect and the beneficial effects thereof. Repeated parts are not described again.

According to an eighth aspect, this application provides a communication apparatus. The apparatus may be an access network device, an apparatus in the access network device, or an apparatus that can be used together with the access network device. The communication apparatus may alternatively be a chip system. The communication apparatus may perform the method according to the second aspect. A function of the communication apparatus may be implemented by hardware, or may be implemented by hardware executing corresponding software. The hardware or the software includes one or more modules corresponding to the function. The module may be software and/or hardware. For operations performed by the communication apparatus and beneficial effects thereof, refer to the method in the second aspect and the beneficial effects thereof. Repeated parts are not described again.

According to a ninth aspect, this application provides a communication apparatus. The communication apparatus includes a processor and a memory. The memory is configured to store computer-executable instructions. The processor is configured to execute the computer-executable instructions stored in the memory, to enable the communication apparatus to perform the method according to the first aspect or the second aspect.

According to a tenth aspect, this application provides a communication apparatus. The communication apparatus includes a processor, a memory, and a transceiver. The transceiver is configured to: receive a channel or a signal, or send a channel or a signal. The memory is configured to store program code. The processor is configured to invoke the program code from the memory to perform the method according to the first aspect or the second aspect.

According to an eleventh aspect, this application provides a computer-readable storage medium. The computer-readable storage medium is configured to store a computer program, and when the computer program is executed, the method according to the first aspect or the second aspect is implemented.

According to a twelfth aspect, this application provides a computer program product including a computer program. When the computer program is executed, the method according to the first aspect or the second aspect is implemented.

According to a thirteenth aspect, an embodiment of this application provides a communication system. The communication system includes at least one terminal device and at least one access network device. The terminal device is configured to perform the steps in the first aspect, and the access network device is configured to perform the steps in the second aspect.

### BRIEF DESCRIPTION OF DRAWINGS

To describe the technical solutions in embodiments of this application or in the background more clearly, the following describes the accompanying drawings required for describing embodiments of this application or the background.
FIG. 1 is a diagram of an architecture of a 5G system;
FIG. 2 is a flowchart of processing a handover failure in an emergency services fallback procedure;
FIG. 3 is another flowchart of processing a handover failure in an emergency services fallback procedure;
FIG. 4 is a diagram of a communication method according to an embodiment of this application;
FIG. 5 is a diagram of another communication method according to an embodiment of this application;
FIG. 6 is a diagram of another communication method according to an embodiment of this application;
FIG. 7 is a diagram of a structure of a communication apparatus according to an embodiment of this application;
FIG. 8 is a diagram of a structure of a communication apparatus according to an embodiment of this application;
FIG. 9 is a diagram of a structure of a terminal device according to an embodiment of this application;
FIG. 10 is a diagram of a structure of an access network device according to an embodiment of this application;
FIG. 11 is a diagram of another communication method according to an embodiment of this application; and
FIG. 12 is a diagram of another communication method according to an embodiment of this application.

### DESCRIPTION OF EMBODIMENTS

The following describes embodiments of this application with reference to the accompanying drawings in embodiments of this application.

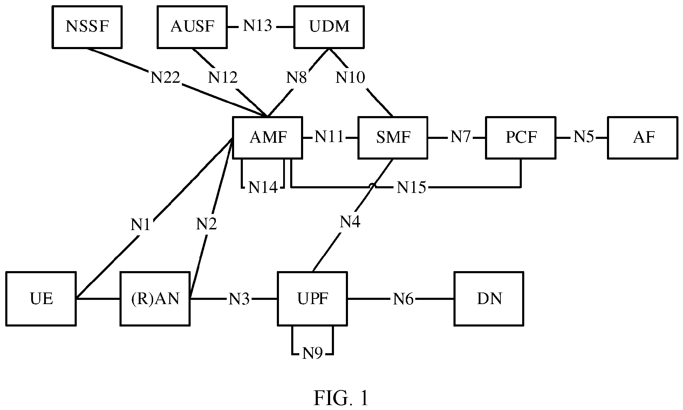

FIG. 1 is a diagram of an architecture of a 5G system. The 5G system includes two parts: an access network and a core network. The access network is configured to implement a function related to radio access. The core network mainly includes the following several key logical network elements: an access and mobility management function (access and mobility management function, AMF) entity, a session management function (session management function, SMF) entity, a user plane function (user plane function, UPF) entity, a policy control function (policy control function, PCF) entity, and a unified data management (unified data management, UDM) entity. The following describes network elements in FIG. 1.

UE may be a terminal device, for example, a mobile phone or an internet of things terminal device.

A radio access network (radio access network, (R)AN) device is a device that provides radio access for UE, and is also referred to as an access network device. The radio access network device includes but not limited to a 5G base station (next generation NodeB, gNB), a wireless-fidelity (wireless-fidelity, Wi-Fi) access point (access point, AP), a worldwide interoperability for microwave access (worldwide interoperability for microwave access, WiMAX) base station (base station, BS), and the like.

An AMF entity is mainly responsible for mobility management in a mobile network, such as user location update, registration of a user with a network, and user switching.

An SMF entity is mainly responsible for session management in a mobile network, such as session establishment, modification, and release. Specific functions of the SMF entity are, for example, assigning an IP address to a user and selecting a UPF that provides a packet forwarding function.

A PCF entity is mainly responsible for providing policies such as a quality of service (quality of service, QoS) policy and a slice selection policy for an AMF and an SMF.

A UDM entity is configured to store user data such as subscription information and authentication/authorization information.

An application function (application function, AF) entity is mainly responsible for providing services for a 3rd generation partnership project (3rd generation partnership project, 3GPP) network, such as influencing service routing and interacting with a PCF to perform policy control.

A UPF entity is mainly responsible for handling of a user packet, such as forwarding and charging.

A data network (data network, DN) is mainly responsible for providing data transmission services for a user, such as an IP multi-media service (IP multi-media service, IMS) and the internet (internet). UE accesses the DN by establishing a session (session) that passes through the UE, a RAN, a UPF, and the DN.

It should be noted that in FIG. 1, the network functions and the entities may exchange messages through different interfaces. For example, the UE and the AMF entity may interact with each other through an N1 interface, and an exchanged message is referred to as an N1 message. Some interfaces are implemented as service-oriented interfaces. The UE, the RAN device, the UPF entity, and the DN in FIG. 1 may be referred to as network functions and entities on a data plane, and are configured to carry service data. User-layer data traffic transmission may be performed by using a PDU session established between the UE and the DN, and passes through two network functional entities: the RAN device and the UPF entity. Other network functions and entities may be collectively referred to as network functions and entities on a control plane, and are configured to carry signaling messages and are mainly responsible for verification and authentication, registration management, session management, mobility management, policy control, and another function, to ensure reliability and stability of the user-layer data traffic transmission.

For an emergency services fallback (emergency services fallback, ESFB) procedure and a 4G fallback for IMS voice (EPS fallback for IMS voice, EPSFB) procedure, a base station includes a voice fallback (voiceFallBack) extension indication in a handover/redirection command. An access stratum (access stratum, AS) on a UE side cannot distinguish whether the voiceFallBack extension indication indicates a common voice service or an emergency service. After handover fails or redirection fails, UE should search for a 4G cell. If the search for a 4G suitable cell (suitable cell) fails, the UE returns to an original 5G cell to perform an RRC re-establishment procedure. This rule is applicable to the EPSFB procedure. For the ESFB procedure, if finding an acceptable cell (acceptable cell), the UE can also obtain the emergency service. According to this mechanism, duration of obtaining the emergency service is delayed, which does not comply with an emergency call principle.

The suitable cell and the acceptable cell are explained below.

The suitable cell is a cell that meets the following conditions: The cell is a part of a public land mobile network (public land mobile network, PLMN)/standalone non-public network (standalone non-public network) selected by UE, a part of a PLMN/SNPN registered by the UE, or a part of a PLMN in an equivalent PLMN list of the UE; and the cell meets a cell selection S criterion (to be specific, receive power Srxlev during cell search>0 dB, and received signal quality Squal during the cell search>0 dB).

The acceptable cell is a cell on which UE may camp to obtain a restricted service. The restricted service includes: initiating an emergency call, and receiving an earthquake and tsunami warning system (earthquake and tsunami warning system, ETWS) notification and a commercial mobile alert service (commercial mobile alert service, CMAS) notification. The acceptable cell needs to meet the following conditions: The cell is not barred (to be specific, system information of the cell indicates that the cell is not barred (barred)); and the cell meets a cell selection S criterion.

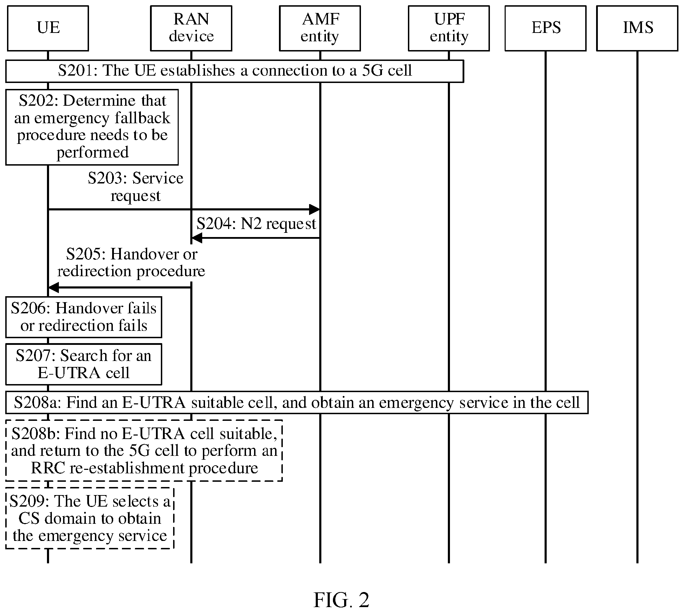

FIG. 2 is a flowchart of processing a handover failure in an emergency services fallback procedure. The procedure mainly includes the following steps.

S201: UE establishes a connection to a 5G cell.

S202: The UE determines that the emergency fallback procedure needs to be performed.

S203: The UE sends a service request (service request) to an AMF entity, where the service request carries an emergency services fallback (emergency services fallback) indication, and the emergency services fallback indication indicates the UE to fall back to a 4G system.

S204: After receiving the service request, the AMF entity sends an N2 request to a RAN device, where the N2 request indicates the RAN device to complete the emergency fallback procedure.

S205: The RAN device initiates a handover or redirection procedure.

Optionally, the RAN device sends a handover or redirection command to the UE. The handover or redirection command carries a voice fallback indicator (voice fallback indication).

S206: The UE fails to be handed over to a target cell or fails to be redirected to a target frequency, where the target cell is a cell in a 4G cell after the handover or the redirection, and the target frequency is a frequency of a cell in a 4G cell after the handover or the redirection.

S207: The UE searches for an evolved UMTS terrestrial radio access (Evolved-UMTS Terrestrial Radio Access, E-UTRA) cell.

S208a: If finding an E-UTRA suitable cell (suitable cell), the UE obtains an emergency service in the E-UTRA suitable cell (suitable cell).

S208b: If finding no E-UTRA suitable cell, the UE returns to the 5G cell to perform a radio resource control (radio resource control, RRC) re-establishment procedure. The 5G cell may be an original 5G cell, or may be another 5G cell.

S209: The UE selects a circuit switched (circuit switched, CS) domain to obtain the emergency service.

In S205, for a voice fallback scenario (including a common call and an emergency call), the RAN device includes the voice fallback indication in the handover/redirection command. In S206, if the handover fails or the redirection fails, the UE should search for an E-UTRA cell. In this process, the UE may find an E-UTRA suitable cell (suitable cell) or an E-UTRA acceptable cell (acceptable cell).

If finding no E-UTRA suitable cell (suitable cell), the UE returns to the 5G cell to perform the RRC re-establishment procedure. This rule is applicable to an EPSFB procedure for a common voice. However, for the ESFB procedure, if the UE finds the E-UTRA acceptable cell (acceptable cell) but does not immediately obtain the emergency service in the E-UTRA acceptable cell (acceptable cell), the UE needs to continue to search for another network (for example, the CS domain in S209) to obtain the emergency service. Consequently, a call initiation delay of the emergency call is increased, which does not comply with an emergency call principle.

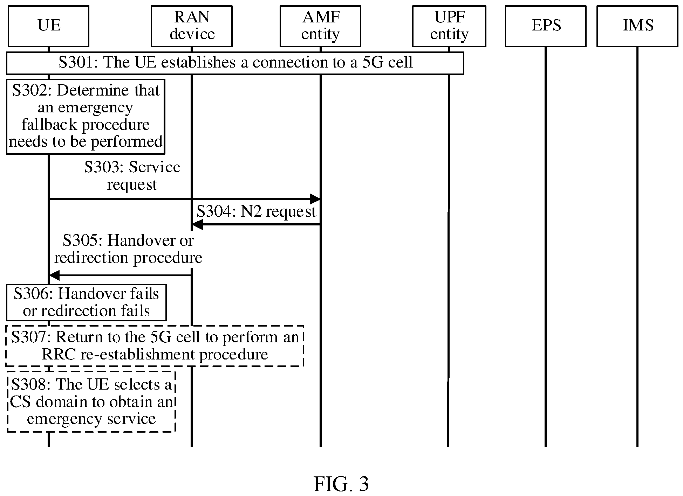

FIG. 3 is another flowchart of processing a handover failure in an emergency services fallback procedure. The procedure mainly includes the following steps.

S301 to S304 are the same as S201 to S204. Details are not described herein again.

S305: A RAN device initiates a handover or redirection procedure, and sends a handover/redirection command to UE.

S306: The UE fails to be handed over to a target cell or fails to be redirected to a target frequency, where the target cell is a cell in a 4G cell after the handover or the redirection, and the target frequency is a frequency of a cell in a 4G cell after the handover or the redirection.

S307: The UE returns to a 5G cell to perform an RRC re-establishment procedure.

S308: The UE selects a circuit switched (circuit switched, CS) domain to obtain an emergency service.

In the foregoing process, if the UE fails to be handed over or fails to be redirected, the UE needs to return to the 5G cell to perform the RRC re-establishment procedure. For the ESFB procedure, because a reason for fallback is that an original 5G system does not support the emergency service, there is a high probability that a 5G cell selected by the UE after re-establishment still cannot support the emergency service. In this case, the UE needs to continue to search for another network (for example, the CS domain in S308) to obtain the emergency service. Consequently, a call initiation delay of an emergency call is increased, which does not comply with an emergency call principle.

To resolve the foregoing technical problem, embodiments of this application provide the following solutions. In the following embodiments, fallback from 5G to 4G is used as an example. A specific standard is not limited in embodiments of this application. Fallback from a first radio access technology (radio access technology, RAT) standard to a second RAT standard should be considered within the scope of the present invention. Optionally, the second RAT standard is lower than the first RAT standard. For example, the first RAT may be 6G, and the second RAT may be 4G or 5G. In this application, a RAT includes 2G, 3G, 4G, 5G, and a possible RAT standard (e.g. 6G) in future evolution.

For example, UE establishes a connection to a cell of the first RAT standard, and after determining that an emergency fallback procedure needs to be performed, the UE sends a service request (service request) to a core network device (for example, an AMF entity). The service request carries an emergency services fallback (emergency services fallback) indication, and the emergency services fallback indication indicates the UE to fall back to a cell of the second RAT standard. Then, a RAN device sends a first message to the UE, where the first message indicates the UE to be handed over to a target cell or to be redirected to a target frequency. If the handover to the target cell fails or the redirection to the target frequency fails, the UE searches for an acceptable cell or a suitable cell. The following provides specific descriptions by using embodiments.

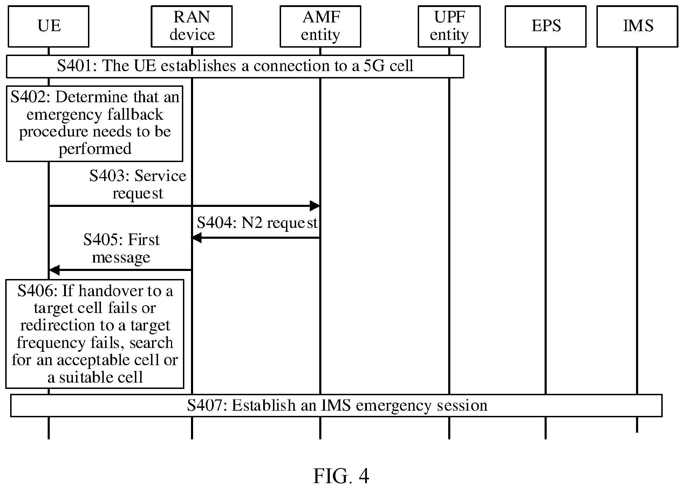

FIG. 4 is a diagram of a communication method according to an embodiment of this application. The method includes the following steps.

S401: UE establishes a connection to a 5G cell.

S402: The UE determines that an emergency fallback procedure needs to be performed.

Optionally, the UE determines that the emergency fallback procedure needs to be performed for handover to a 4G system to perform an emergency call.

S403: The UE sends a service request (service request) to an AMF entity, where the service request carries an emergency services fallback (emergency services fallback) indication, and the emergency services fallback indication indicates the UE to fall back to the 4G system.

S404: After receiving the service request, the AMF entity sends an N2 request to a RAN device, where the N2 request indicates the RAN device to complete the emergency fallback procedure.

S405: The RAN device sends a first message to the UE, where the first message indicates the UE to be handed over to a target cell or to be redirected to a target frequency.

The first message may be a mobility from new radio command message (mobility from NR command message), mobility from evolved universal terrestrial radio access (mobility from E-UTRA command message), an RRC release message (RRC release message/RRC connection release message), or an RRC reconfiguration message (RRC reconfiguration message/RRC connection reconfiguration message).

The first message includes no second indication information. The second indication information may be a voice fallback indication, and the second indication information indicates voice fallback. The first message includes first indication information. The first indication information may be an emergency call fallback indication, and the first indication information indicates emergency call fallback. In other words, the first message delivered by the RAN device does not carry the voice fallback indication, but the emergency call fallback indication is added, indicating that the handover or the redirection is for completing an ESFB procedure.

Optionally, the RAN device may send the first indication information to the UE, in other words, the first indication information is not carried in the first message, but is separately sent by the RAN device to the UE.

Optionally, the first message may include an identifier of the target cell or information about the target frequency. The information about the target frequency indicates an absolute value of the frequency or an index of the frequency. The target cell may be a 4G cell, and the target frequency may be a 4G frequency. Further, the first message indicates the UE to be handed over from an original 5G cell to the 4G cell or to be redirected from a frequency of the original 5G cell to the 4G frequency.

S406: If the handover to the target cell fails or the redirection to the target frequency fails, the UE searches for an acceptable cell or a suitable cell.

Specifically, after the handover to the target cell fails or the redirection to the target frequency fails, the UE may search for the acceptable cell or the suitable cell. If finding the acceptable cell or the suitable cell, the UE reads a system message of the acceptable cell or the suitable cell, and determines, based on the system message, whether the acceptable cell or the suitable cell supports an emergency service.

Further, if the acceptable cell or suitable cell that is found is a cell supporting the emergency service, the UE may release a radio resource control (radio resource control, RRC) connection to a source cell, enter an RRC idle (IDLE) state, and then establish an RRC connection to the acceptable cell or suitable cell that is found, where the source cell is the original 5G cell to which the UE establishes a connection; and/or if the acceptable cell or the suitable cell that is found is a cell supporting the emergency service, the UE may camp on the acceptable cell or suitable cell that is found, and then perform the emergency service, for example, the emergency call, in the acceptable cell or suitable cell.

It should be noted that if first finding the acceptable cell or the suitable cell, the UE may preferentially select the found cell for camping on. To be specific, if the acceptable cell is first found, the acceptable cell is selected for camping on, and then the emergency service is obtained in the acceptable cell; or if the suitable cell is first found, the suitable cell is selected for camping on, and then the emergency service is obtained in the suitable cell

Optionally, if the handover to the target cell fails or the redirection to the target frequency fails, an access stratum (access stratum, AS) of the UE sends fifth indication information to an application layer and/or a non-access stratum (non-access stratum, NAS) of the UE. The fifth indication information indicates that the handover to the target cell fails or the redirection to the target frequency fails. That the handover to the target cell fails or the redirection to the target frequency fails may be understood as: The UE fails to access the target cell, the UE fails to establish a connection to the target cell, or the UE fails to perform a random access procedure (random access procedure) in the target cell; or the UE fails to find a cell of the target frequency, or a master information block (master information block, MIB) and/or a system information block (system information block, SIB) fail/fails to be parsed after the target frequency is found.

The acceptable cell or the suitable cell may be an E-UTRA cell.

Optionally, if finding no acceptable cell or no suitable cell, the UE triggers an RRC re-establishment procedure. Alternatively, if finding no acceptable cell or no suitable cell, the UE performs RRC re-establishment by using configuration information of the source cell, where the source cell is the original 5G cell to which the UE establishes the connection before the handover or the redirection. Alternatively, if no acceptable cell or no suitable cell is found, the access stratum of the UE may send fourth indication information to the application layer and/or the non-access stratum of the UE, where the fourth indication information indicates that no acceptable cell or no suitable cell is found. Alternatively, if finding no acceptable cell or no suitable cell, the UE may search for a cell of another standard, for example, a 2G cell or a 3G cell.

It should be noted that that if the handover to the target cell fails or the redirection to the target frequency fails, the UE searches for the acceptable cell or the suitable cell may also be understood as: When the handover to the target cell fails or the redirection to the target frequency fails, the UE searches for the acceptable cell or the suitable cell; after the handover to the target cell fails or the redirection to the target frequency fails, the UE searches for the acceptable cell or the suitable cell; or it is assumed that the handover to the target cell fails or the redirection to the target frequency fails, and the UE searches for the acceptable cell or the suitable cell.

S407: The UE establishes an internet protocol multimedia subsystem (IP multimedia subsystem, IMS) emergency session.

In this embodiment of this application, in the ESFB procedure, after the UE receives the emergency call fallback indication sent by the RAN device, the access stratum of the UE determines that the ESFB procedure needs to be completed currently. After the handover fails or the redirection fails, based on emergency call procedure processing, if finding any 4G cell supporting an emergency service, the UE may immediately establish an emergency bearer to obtain the emergency service, to reduce an emergency call delay.

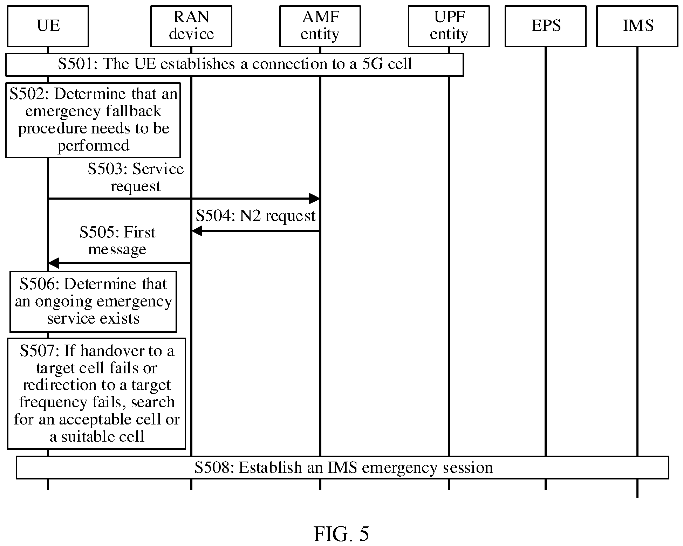

FIG. 5 is a diagram of another communication method according to an embodiment of this application. The method includes the following steps.

S501: UE establishes a connection to a 5G cell.

S502: The UE determines that an emergency fallback procedure needs to be performed.

Optionally, the UE determines that the emergency fallback procedure needs to be performed for handover to a 4G system to perform an emergency call.

S503: The UE sends a service request (service request) to an AMF entity, where the service request carries an emergency services fallback (emergency services fallback) indication, and the emergency services fallback indication indicates the UE to fall back to the 4G system.

S504: After receiving the service request, the AMF entity sends an N2 request to a RAN device, where the N2 request indicates the RAN device to complete the emergency fallback procedure.

S505: The RAN device sends a first message to the UE, where the first message indicates the UE to be handed over to a target cell or to be redirected to a target frequency.

The first message may be a mobility from new radio command message (mobility from NR command message), mobility from evolved universal terrestrial radio access (mobility from E-UTRA command message), an RRC release message (RRC release message/RRC connection release message), or an RRC reconfiguration message (RRC reconfiguration message/RRC connection reconfiguration message).

The first message includes no first indication information. The first indication information may be an emergency call fallback indication, and indicates emergency call fallback. The first message includes second indication information. The second indication information may be a voice fallback indication, and the second indication information indicates voice fallback.

Optionally, the RAN device may send the second indication information to the UE, in other words, the second indication information is not carried in the first message, but is separately sent by the RAN device to the UE.

Optionally, the first message may include an identifier of the target cell or information about the target frequency. The information about the target frequency indicates an absolute value of the frequency or an index of the frequency. The target cell may be a 4G cell, and the target frequency is a 4G frequency.

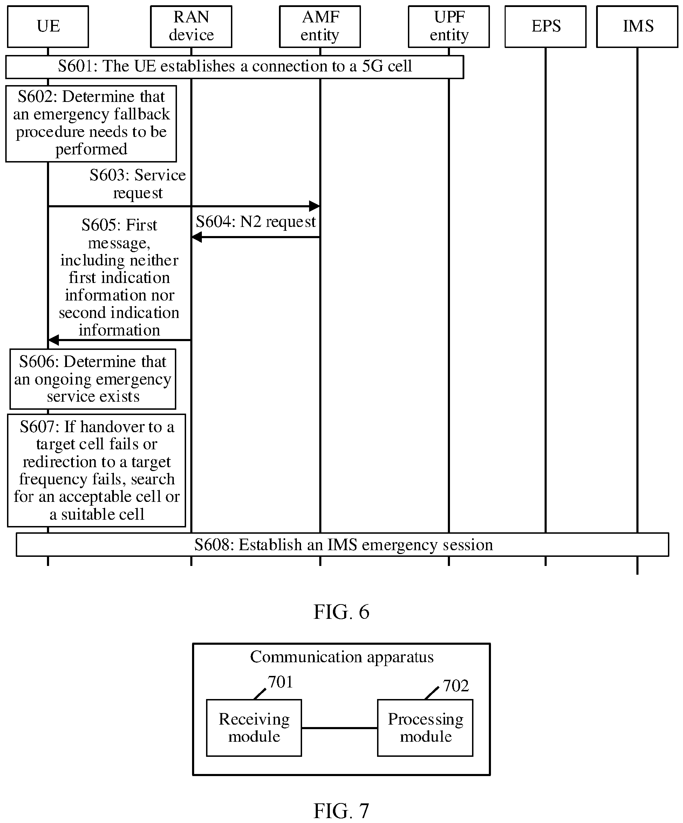

It should be noted that the first message that is in S505 in FIG. 5 and that is sent by the RAN device includes the first indication information, or the RAN device separately sends the first indication information. A first message that is in S605 in FIG. 6 and that is sent by a RAN device includes the second indication information, or a RAN device separately sends the second indication information.

S506: The UE determines that an ongoing emergency service exists.

Specifically, the UE may determine, in the following several optional manners, that the ongoing emergency service exists.

In a first optional manner, an application layer and/or a non-access stratum of the UE send/sends third indication information to an access stratum of the UE, where the third indication information indicates that the ongoing emergency service exists. The access stratum of the UE receives the third indication information, and it may be determined that the ongoing emergency service exists.

In a second optional manner, the UE may query whether the UE has the ongoing emergency service; and if finding the ongoing emergency service, the UE determines that the ongoing emergency service exists. Specifically, an access stratum of the UE may query an ESFB state of an application layer and/or a non-access stratum of the UE. If finding that the ongoing emergency service on the application layer and/or the non-access stratum of the UE, the UE determines that the ongoing emergency service exists.

In a third optional manner, an access stratum of the UE may send a query request to an application layer and/or a non-access stratum of the UE. If the application layer and/or the non-access stratum of the UE has the ongoing emergency service, the application layer and/or the non-access stratum of the UE send/sends third indication information to the access stratum of the UE, where the third indication information indicates that the ongoing emergency service exists. The access stratum of the UE receives the third indication information, and it is determined that the ongoing emergency service exists.

It should be noted that a sequence of S506 and other steps is not limited, and the step that the UE determines that the ongoing emergency service exists may be performed before or after the other steps. For example, after the UE receives the service request sent by the AMF entity, the application layer and/or the non-access stratum of the UE may notify the access stratum of the UE whether the ongoing emergency service exists.

It should be understood that when the UE receives no emergency call fallback indication, if the UE determines that the ongoing emergency service exists, the UE performs processing by default based on an emergency call procedure, and S507 is performed.

S507: If the handover to the target cell fails or the redirection to the target frequency fails, the UE searches for an acceptable cell or a suitable cell.

An implementation of this step is the same as the implementation of S406 in the embodiment shown in FIG. 4. For a specific implementation, refer to S406. Details are not described in this step again.

S508: The UE establishes an IMS emergency session.

In this embodiment of this application, in an ESFB procedure, when the UE receives an original voice fallback indication, if the UE determines that the ongoing emergency service exists, the emergency call fallback is implicitly indicated. After the handover fails or the redirection fails, based on emergency call procedure processing, if finding any 4G cell supporting an emergency service, the UE may immediately establish an emergency bearer to obtain the emergency service, to reduce an emergency call delay.

FIG. 6 is a diagram of another communication method according to an embodiment of this application. The method includes the following steps.

S601: UE establishes a connection to a 5G cell.

S602: The UE determines that an emergency fallback procedure needs to be performed.

Optionally, the UE determines that the emergency fallback procedure needs to be performed for handover to a 4G system to perform an emergency call.

S603: The UE sends a service request (service request) to an AMF entity, where the service request carries an emergency services fallback (emergency services fallback) indication, and the emergency services fallback indication indicates the UE to fall back to the 4G system.

S604: After receiving the service request, the AMF entity sends an N2 request to a RAN device, where the N2 request indicates the RAN device to complete the emergency fallback procedure.

S605: The RAN device sends a first message to the UE, where the first message indicates the UE to be handed over to a target cell or to be redirected to a target frequency.

The first message may be a mobility from new radio command message (mobility from NR command message), mobility from evolved universal terrestrial radio access (mobility from E-UTRA command message), an RRC release message (RRC release message/RRC connection release message), or an RRC reconfiguration message (RRC reconfiguration message/RRC connection reconfiguration message).

The first message includes neither first indication information nor second indication information. The first indication information indicates emergency call fallback, and the second indication information indicates voice fallback.

Optionally, the first message may include an identifier of the target cell or information about the target frequency. The information about the target frequency indicates an absolute value of the frequency or an index of the frequency. The target cell may be a 4G cell, and the target frequency is a 4G frequency.

S606: The UE determines that an ongoing emergency service exists.

An implementation of this step is the same as the implementation of S506 in the embodiment shown in FIG. 5. For a specific implementation, refer to S506. Details are not described in this step again.

It should be understood that when the UE receives no voice fallback indication and an emergency call fallback indication, if the UE determines that the ongoing emergency service exists, the UE performs processing by default based on an emergency call procedure, and S607 is performed.

S607: If the handover to the target cell fails or the redirection to the target frequency fails, the UE searches for an acceptable cell or a suitable cell.

An implementation of this step is the same as the implementation of S406 in the embodiment shown in FIG. 4. For a specific implementation, refer to S406. Details are not described in this step again.

S608: The UE establishes an IMS emergency session.

In this embodiment of this application, in an ESFB procedure, when the UE receives the first message but receives neither the voice fallback indication nor the emergency call fallback indication, if the UE determines that the ongoing emergency service exists, the emergency call fallback is implicitly indicated, to reduce signaling overheads. After the handover/the redirection fails, based on emergency call procedure processing, if finding any 4G cell supporting an emergency service, the UE immediately establishes an emergency bearer to obtain the emergency service, to reduce an emergency call delay.

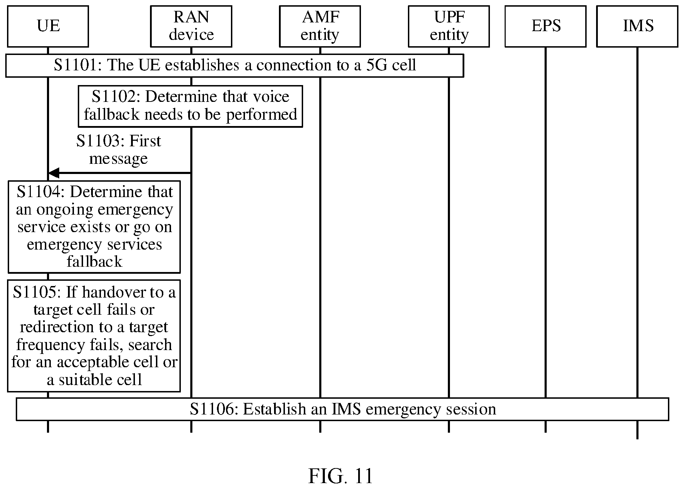

FIG. 11 is a diagram of another communication method according to an embodiment of this application. The method includes the following steps.

S1101: UE establishes a connection to a 5G cell.

S1102: ARAN device determines that voice fallback needs to be performed.

Optionally, the voice fallback is voice fallback triggered by using an emergency service.

S1 103: The RAN device sends a first message to the UE, where the first message indicates the UE to be handed over to a target cell or to be redirected to a target frequency.

The first message may be a mobility from new radio command message (mobility from NR command message), mobility from evolved universal terrestrial radio access (mobility from E-UTRA command message), an RRC release message (RRC release message/RRC connection release message), or an RRC reconfiguration message (RRC reconfiguration message/RRC connection reconfiguration message).

The first message includes second indication information. The second indication information may be a voice fallback indication, and the second indication information indicates the voice fallback.

Optionally, the RAN device may send the second indication information to the UE, in other words, the second indication information is not carried in the first message, but is separately sent by the RAN device to the UE.

Optionally, the first message may include an identifier of the target cell or information about the target frequency. The information about the target frequency indicates an absolute value of the frequency or an index of the frequency. The target cell may be a 4G cell, and the target frequency is a 4G frequency.

S 1104: The UE determines that an ongoing emergency service exists, that the UE needs to perform an emergency service, that the UE goes on emergency services fallback, or that the UE needs to perform emergency services fallback.

Optionally, the UE may initiate the emergency services fallback, or the UE may initiate the emergency services fallback before receiving the first message. That the UE may initiate the emergency services fallback includes that the UE actively initiates the emergency services fallback.

Specifically, the UE may determine, in the following several optional manners, that the ongoing emergency service exists.

In a first optional manner, an application layer and/or a non-access stratum of the UE send/sends third indication information to an access stratum of the UE, where the third indication information indicates that the ongoing emergency service exists. The access stratum of the UE receives the third indication information, and it may be determined that the ongoing emergency service exists.

In a second optional manner, the UE may query whether the UE has the ongoing emergency service; and if finding the ongoing emergency service, the UE determines that the ongoing emergency service exists. Specifically, an access stratum of the UE may query an ESFB state of an application layer and/or a non-access stratum of the UE. If finding that the ongoing emergency service on the application layer and/or the non-access stratum of the UE, the UE determines that the ongoing emergency service exists.

In a third optional manner, an access stratum of the UE may send a query request to an application layer and/or a non-access stratum of the UE. If the application layer and/or the non-access stratum of the UE has the ongoing emergency service, the application layer and/or the non-access stratum of the UE send/sends third indication information to the access stratum of the UE, where the third indication information indicates that the ongoing emergency service exists. The access stratum of the UE receives the third indication information, and it is determined that the ongoing emergency service exists.

It should be noted that a sequence of S1104 and other steps is not limited, and the step that the UE determines that the ongoing emergency service exists may be performed before or after the other steps. For example, after the UE receives the service request sent by the AMF entity, the application layer and/or the non-access stratum of the UE may notify the access stratum of the UE whether the ongoing emergency service exists.

S1105: If the handover to the target cell fails or the redirection to the target frequency fails, the UE searches for an acceptable cell or a suitable cell.

An implementation of this step is the same as the implementation of S406 in the embodiment shown in FIG. 4. For a specific implementation, refer to S406. Details are not described in this step again.

S1106: The UE establishes an IMS emergency session.

In this embodiment of this application, when the UE receives the voice fallback indication, if the UE determines that the ongoing emergency service exists or the UE goes on the emergency services fallback, the voice fallback indication implicitly indicates the emergency services fallback. After the handover fails or the redirection fails, based on emergency services procedure processing, if finding any 4G cell supporting an emergency service, the UE may immediately establish an emergency bearer to obtain the emergency service, to reduce an emergency service delay.

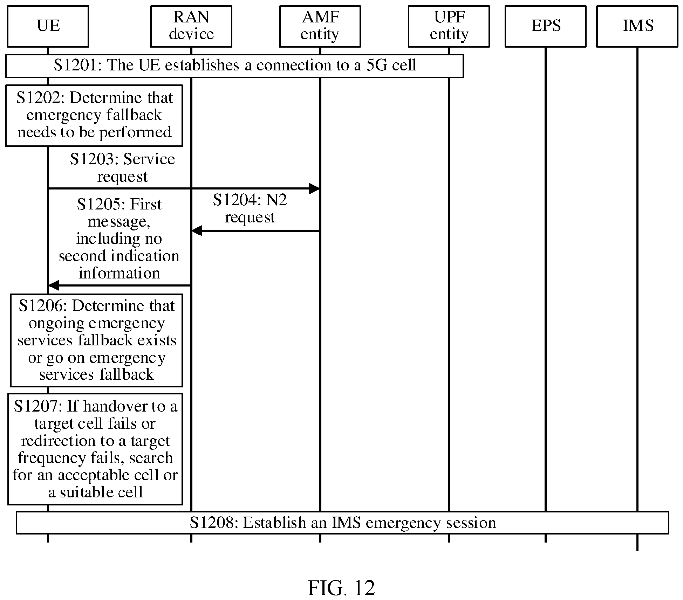

FIG. 12 is a diagram of another communication method according to an embodiment of this application. The method includes the following steps.

S1201: UE establishes a connection to a 5G cell.

S1202: The UE determines that emergency fallback needs to be performed.

Optionally, the UE determines that an emergency fallback procedure needs to be performed for handover to a 4G system to perform an emergency call.

S1203: The UE sends a service request (service request) to an AMF entity, where the service request carries an emergency services fallback (emergency services fallback) indication, and the emergency services fallback indication indicates the UE to fall back to the 4G system.

S1204: After receiving the service request, the AMF entity sends an N2 request to a RAN device, where the N2 request indicates the RAN device to complete the emergency fallback procedure.

S1205: The RAN device sends a first message to the UE, where the first message indicates the UE to be handed over to a target cell or to be redirected to a target frequency.

The first message may be a mobility from new radio command message (mobility from NR command message), mobility from evolved universal terrestrial radio access (mobility from E-UTRA command message), an RRC release message (RRC release message/RRC connection release message), or an RRC reconfiguration message (RRC reconfiguration message/RRC connection reconfiguration message).

The first message includes no second indication information. The second indication information indicates voice fallback.

Optionally, the first message may include an identifier of the target cell or information about the target frequency. The information about the target frequency indicates an absolute value of the frequency or an index of the frequency. The target cell may be a 4G cell, and the target frequency is a 4G frequency.

S1206: The UE determines that an ongoing emergency service exists, that the UE needs to perform an emergency service, that the UE goes on emergency services fallback, or that the UE needs to perform emergency services fallback.

Optionally, the UE may initiate the emergency services fallback, or the UE may initiate the emergency services fallback before receiving the first message. That the UE may initiate the emergency services fallback includes that the UE actively initiates the emergency services fallback.

An implementation of this step is the same as the implementation of S1104 in the embodiment shown in FIG. 11. For a specific implementation, refer to S1104. Details are not described in this step again.

It should be understood that when the UE receives no voice fallback indication, if the UE determines that the ongoing emergency service exists or that the UE goes on the emergency services fallback, the UE may perform processing by default based on an emergency call procedure, and S1207 is performed.

S1207: If the handover to the target cell fails or the redirection to the target frequency fails, the UE searches for an acceptable cell or a suitable cell.

An implementation of this step is the same as the implementation of S406 in the embodiment shown in FIG. 4. For a specific implementation, refer to S406. Details are not described in this step again.

S1208: The UE establishes an IMS emergency session.

In this embodiment of this application, in an ESFB procedure, when the UE receives the first message but receives no voice fallback indication, if the UE determines that the ongoing emergency service exists or that the UE goes on the emergency services fallback, the first message implicitly indicates the emergency services fallback, to reduce signaling overheads. After the handover/the redirection fails, based on emergency call procedure processing, if finding any 4G cell supporting an emergency service, the UE immediately establishes an emergency bearer to obtain the emergency service, to reduce an emergency call delay.

It should be understood that in this application, the emergency service may also be referred to as an emergency service, and the emergency service may include an emergency call.

It should be understood that in the foregoing embodiments, the terminal device and/or the network device may perform some or all of the steps in embodiments. For example, S401 to S404 in the embodiment shown in FIG. 4, S501 to S504 in the embodiment shown in FIG. 5, and S601 to S604 in the embodiment shown in FIG. 6 are all optional. These steps or operations are merely examples. Other operations or variations of various operations may be further performed in embodiments of this application. In addition, the steps may be performed in different sequences presented in embodiments, and not all operations in embodiments of this application may need to be performed. In addition, sequence numbers of the steps do not mean an execution sequence. An execution sequence of the processes should be determined based on functions and internal logic of the processes, and should not constitute any limitation on the implementation processes of embodiments of this application.

It may be understood that in the foregoing method embodiments, the methods and operations that are implemented by the terminal device may alternatively be implemented by a component (for example, a chip or a circuit) that may be used in the terminal device, and the methods and the operations that are implemented by the access network device may alternatively be implemented by a component (for example, a chip or a circuit) that may be used in the access network device.

The foregoing mainly describes the solutions provided in embodiments of this application from a perspective of interaction. It may be understood that to implement the foregoing functions, each network element, such as a transmit end device or a receive end device, includes a corresponding hardware structure and/or software module for performing each function. A person skilled in the art may be aware that with reference to the examples described in embodiments disclosed in this specification, units and algorithm steps can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of the terminal device or the access network device may be obtained through division based on the foregoing method examples. For example, each functional module may be obtained through division based on each corresponding function, or two or more functions may be integrated into one processing module. The foregoing integrated module may be implemented in a form of hardware, or may be implemented in a form of a software functional module. It should be noted that in embodiments of this application, module division is an example, and is merely a logical function division. During actual implementation, another division manner may be used. Descriptions are provided below by using an example in which each functional module is obtained through division corresponding to each function.

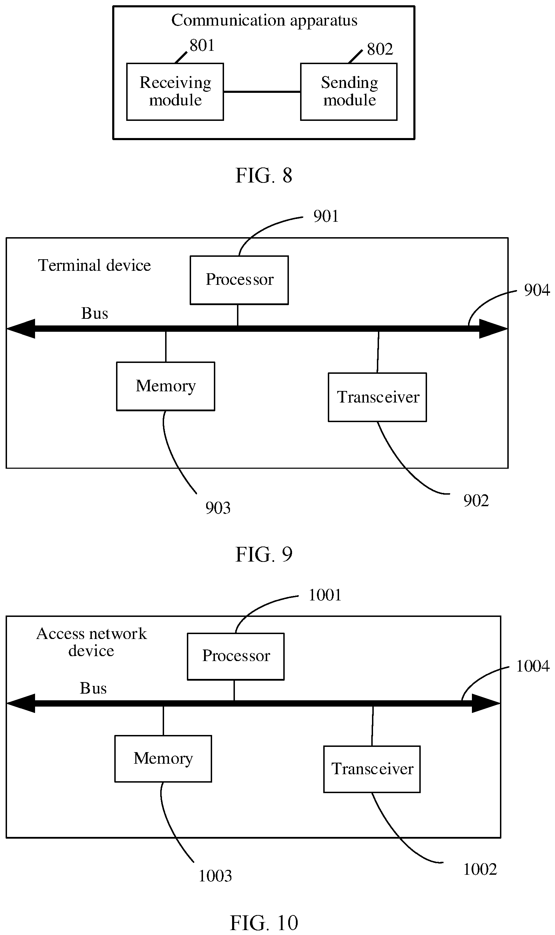

The foregoing describes in detail, with reference to FIG. 4 to FIG. 6, the methods provided in embodiments of this application. The following describes in detail, with reference to FIG. 7 and FIG. 8, communication apparatuses provided in embodiments of this application. It should be understood that descriptions of apparatus embodiments correspond to the descriptions of the method embodiments. Therefore, for content that is not described in detail, refer to the method embodiments. For brevity, details are not described herein again.

FIG. 7 is a diagram of a structure of a communication apparatus according to an embodiment of this application. The communication apparatus may include a receiving module 701 and a processing module 702. The receiving module 701 may communicate with the outside, and the processing module 702 is configured to perform processing, for example, search for a suitable cell or an acceptable cell. The receiving module 701 may also be referred to as a communication interface, a transceiver unit, or a transceiver module. The receiving module 701 and the processing module 702 may be configured to perform an action performed by the terminal device in the foregoing method embodiments.

For example, the receiving module 701 may also be referred to as the transceiver module or the transceiver unit (including a receiving unit and/or a sending unit), and is separately configured to perform receiving steps of the terminal device in the foregoing method embodiments.

In a possible design, the communication apparatus may implement steps or procedures performed by the terminal device corresponding to the foregoing method embodiments. For example, the communication apparatus may be a terminal device, or a chip or a circuit configured in the terminal device. The receiving module 701 is configured to perform receiving and sending-related operations on a terminal device side in the foregoing method embodiments, and the processing module 702 is configured to perform processing-related operations of the terminal device in the foregoing method embodiments.

The receiving module 701 is configured to receive a first message from an access network device, where the first message indicates a terminal device to be handed over to a target cell or to be redirected to a target frequency.

The processing module 702 is configured to: if the handover to the target cell fails or the redirection to the target frequency fails, search for the acceptable cell or the suitable cell.

Optionally, the first message includes first indication information;
the first message includes second indication information but includes no first indication information; or
the first message includes neither first indication information nor second indication information.

The first indication information indicates emergency call fallback, and the second indication information indicates voice fallback.

Optionally, the first message is one of the following: a mobility from new radio NR command message, a mobility from evolved universal terrestrial radio access E-UTRA command message, a radio resource control RRC release message, or a radio resource control RRC reconfiguration message.

Optionally, the processing module 702 is further configured to determine that an ongoing emergency service exists.

Optionally, the processing module 702 is further configured to receive third indication information from an application layer and/or a non-access stratum of the terminal device through an access stratum of the terminal device, where the third indication information indicates that the ongoing emergency service exists.

Optionally, the processing module 702 is further configured to: query whether the terminal device has the ongoing emergency service; and if finding the ongoing emergency service, determine that the ongoing emergency service exists.

Optionally, the processing module 702 is further configured to: if the acceptable cell or the suitable cell that is found is a cell supporting an emergency service, enter a radio resource control idle RRC_IDLE state; and/or if the acceptable cell or the suitable cell that is found is a cell supporting an emergency service, perform the emergency service in the acceptable cell or the suitable cell.

Optionally, the processing module 702 is further configured to:
if finding no acceptable cell or no suitable cell, trigger a radio resource control RRC re-establishment procedure;
if finding no acceptable cell or no suitable cell, perform RRC re-establishment by using configuration information of a source cell;
if finding no acceptable cell or no suitable cell, send fourth indication information to the application layer and/or the non-access stratum of the terminal device through the access stratum of the terminal device, where the fourth indication information indicates that no acceptable cell or no suitable cell is found; or
if finding no acceptable cell or no suitable cell, search for a cell of another standard.

Optionally, the processing module 702 is further configured to send fifth indication information to the application layer and/or the non-access stratum of the terminal device through the access stratum of the terminal device, where the fifth indication information indicates that the handover to the target cell fails or the redirection to the target frequency fails.

It should be noted that for implementation of each module, refer to the corresponding descriptions in the method embodiments shown in FIG. 4 to FIG. 6, to perform the methods and the functions performed by the terminal device in the foregoing embodiments.

FIG. 8 is a diagram of a structure of a communication apparatus according to an embodiment of this application. The communication apparatus may include a receiving module 801 and a sending module 802. The receiving module 801 and the sending module 802 may communicate with the outside. The receiving module 801 and the sending module 802 may also be referred to as a communication interface, a transceiver unit, or a transceiver module. The receiving module 801 and the sending module 802 may be configured to perform actions performed by the access network device in the foregoing method embodiments.

For example, the receiving module 801 and the sending module 802 may also be referred to as the transceiver module or the transceiver unit (including a receiving unit and/or a sending unit), and are respectively configured to perform receiving and sending steps of the access network device in the foregoing method embodiments.

In a possible design, the communication apparatus may implement steps or procedures performed by the access network device corresponding to the foregoing method embodiments. For example, the communication apparatus may be an access network device, or a chip or a circuit configured in the access network device. The receiving module 801 and the sending module 802 are configured to perform receiving and sending-related operations on an access network device side in the foregoing method embodiments.

The receiving module 801 is configured to receive an emergency fallback request.

The sending module 802 is configured to send a first message to a terminal device in response to the emergency fallback request, where
the first message includes first indication information;
the first message includes second indication information but includes no first indication information; or
the first message includes neither first indication information nor second indication information.

The first indication information indicates emergency call fallback, and the second indication information indicates voice fallback.

Optionally, the first message is one of the following: a mobility from new radio NR command message, a mobility from evolved universal terrestrial radio access E-UTRA command message, a radio resource control RRC release message, or a radio resource control RRC reconfiguration message.

It should be noted that for implementation of each module, refer to the corresponding descriptions in the method embodiments shown in FIG. 4 to FIG. 6, to perform the methods and the functions performed by the access network device in the foregoing embodiments.

FIG. 9 is a diagram of a structure of a terminal device according to an embodiment of this application. The terminal device may be used in the system shown in FIG. 1, to perform functions of the terminal device in the foregoing method embodiments, or implement steps or procedures performed by the terminal device in the foregoing method embodiments.

As shown in FIG. 9, the terminal device includes a processor 901 and a transceiver 902. Optionally, the terminal device further includes a memory 903. The processor 901, the transceiver 902, and the memory 903 may communicate with each other through an internal connection path, to transfer a control signal and/or a data signal. The memory 903 is configured to store a computer program. The processor 901 is configured to invoke the computer program from the memory 903 and run the computer program, to control the transceiver 902 to receive/send a signal. Optionally, the terminal device may further include an antenna, configured to send, via a radio signal, uplink data or uplink control signaling output by the transceiver 902.

The processor 901 may correspond to the processing module in FIG. 7. The processor 901 and the memory 903 may be combined into one processing apparatus. The processor 901 is configured to execute program code stored in the memory 903 to implement the foregoing functions. During specific implementation, the memory 903 may alternatively be integrated into the processor 901, or may be independent of the processor 901.

The transceiver 902 may correspond to the receiving module in FIG. 7, and may also be referred to as a transceiver unit or a transceiver module. The transceiver 902 may include a receiver (also referred to as a receiver machine or a receiver circuit) and a transmitter (also referred to as a transmitter machine or a transmitter circuit). The receiver is configured to receive a signal, and the transmitter is configured to transmit a signal.

It should be understood that the terminal device shown in FIG. 9 can implement processes related to the terminal device in the method embodiments in FIG. 4 and FIG. 6. Operations and/or functions of modules in the terminal device are separately intended to implement the corresponding procedures in the foregoing method embodiments. For details, refer to the descriptions in the foregoing method embodiments. To avoid repetition, detailed descriptions are properly omitted herein.

The processor 901 may be configured to perform actions that are implemented inside the terminal device and that are described in the foregoing method embodiments, and the transceiver 902 may be configured to perform actions that are sent by the terminal device to the access network device or received from the access network device and that are described in the foregoing method embodiments. For details, refer to the descriptions in the foregoing method embodiments. Details are not described herein again.

The processor 901 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor 901 may be a combination of processors implementing a computing function, for example, a combination of one or more microprocessors or a combination of a digital signal processor and a microprocessor. A communication bus 904 may be a peripheral component interconnect PCI bus, an extended industry standard architecture EISA bus, or the like. The bus may be classified into an address bus, a data bus, a control bus, and the like. For ease of representation, only one thick line represents the bus in FIG. 9, but this does not mean that there is only one bus or only one type of bus. The communication bus 904 is configured to implement connection and communication between these components. The transceiver 902 in this embodiment of this application is configured to perform signaling or data communication with another node device. The memory 903 may include a volatile memory, for example, a non-volatile dynamic random access memory (non-volatile random access memory, NVRAM), a phase-change random access memory (phase-change RAM, PRAM), or a magnetoresistive random access memory (magnetoresistive RAM, MRAM). The memory 903 may further include a non-volatile memory, for example, at least one magnetic disk storage device, an electrically erasable programmable read-only memory (electrically erasable programmable read-only memory, EEPROM), a flash memory device such as a NOR flash memory (NOR flash memory) or a NAND flash memory (NAND flash memory), or a semiconductor device such as a solid-state disk (solid-state disk, SSD). Optionally, the memory 903 may alternatively be at least one storage apparatus far away from the processor 901. Optionally, the memory 903 may further store a group of computer program code or configuration information. Optionally, the processor 901 may further execute the program stored in the memory 903. The processor may cooperate with the memory and the transceiver to perform any one of the methods and the functions of the terminal device in the foregoing embodiments of this application.

FIG. 10 is a diagram of a structure of an access network device according to an embodiment of this application. The access network device may be used in the system shown in FIG. 1, to perform functions of the access network device in the foregoing method embodiments, or implement steps or procedures performed by the access network device in the foregoing method embodiments.

As shown in FIG. 10, the access network device includes a processor 1001 and a transceiver 1002. Optionally, the access network device further includes a memory 1003. The processor 1001, the transceiver 1002, and the memory 1003 may communicate with each other through an internal connection path, to transfer a control signal and/or a data signal. The memory 1003 is configured to store a computer program. The processor 1001 is configured to invoke the computer program from the memory 1003 and run the computer program, to control the transceiver 1002 to receive/send a signal. Optionally, the access network device may further include an antenna, configured to send, via a radio signal, uplink data or uplink control signaling output by the transceiver 1002.

The processor 1001 and the memory 1003 may be integrated into one processing apparatus. The processor 1001 is configured to execute program code stored in the memory 1003, to implement the foregoing functions. During specific implementation, the memory 1003 may alternatively be integrated into the processor 1001, or may be independent of the processor 1001.

The transceiver 1002 may correspond to the sending module and the receiving module in FIG. 8, and may also be referred to as a transceiver unit or a transceiver module. The transceiver 1002 may include a receiver (also referred to as a receiver machine or a receiver circuit) and a transmitter (also referred to as a transmitter machine or a transmitter circuit). The receiver is configured to receive a signal, and the transmitter is configured to transmit a signal.

It should be understood that the access network device shown in FIG. 10 can implement processes related to the access network device in the method embodiments in FIG. 4 and FIG. 6. Operations and/or functions of modules in the access network device are separately intended to implement the corresponding procedures in the foregoing method embodiments. For details, refer to the descriptions in the foregoing method embodiments. To avoid repetition, detailed descriptions are properly omitted herein.

The processor 1001 may be configured to perform actions that are implemented inside the access network device and that are described in the foregoing method embodiments, and the transceiver 1002 may be configured to perform actions that are sent by the access network device to the terminal device or received from the terminal device and that are described in the foregoing method embodiments. For details, refer to the descriptions in the foregoing method embodiments. Details are not described herein again.

The processor 1001 may be processors of various types that are mentioned above. A communication bus 1004 may be a peripheral component interconnect PCI bus, an extended industry standard architecture EISA bus, or the like. The bus may be classified into an address bus, a data bus, a control bus, and the like. For ease of representation, only one thick line represents the bus in FIG. 10, but this does not mean that there is only one bus or only one type of bus. The communication bus 1004 is configured to implement connection and communication between these components. The transceiver 1002 in the device in this embodiment of this application is configured to perform signaling or data communication with another device. The memory 1003 may be memories of various types that are mentioned above. Optionally, the memory 1003 may alternatively be at least one storage apparatus far away from the processor 1001. The memory 1003 stores a group of computer program code or configuration information, and the processor 1001 executes the program in the memory 1003. The processor may cooperate with the memory and the transceiver to perform any one of the methods and the functions of the access network device in the foregoing embodiments of this application.

An embodiment of this application further provides a chip system. The chip system includes a processor, configured to support a terminal device or an access network device in implementing a function in any one of the foregoing embodiments, for example, generating or processing the first message in the foregoing methods. In a possible design, the chip system may further include a memory, and the memory is configured to store program instructions and data that are necessary for the terminal device or the access network device. The chip system may include a chip, or may include a chip and another discrete component. Input and output of the chip system respectively correspond to receiving and sending operations of the terminal device or the access network device in the method embodiments.

An embodiment of this application further provides a processing apparatus, including a processor and an interface. The processor may be configured to perform the methods in the foregoing method embodiments.

It should be understood that the processing apparatus may be a chip. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

In an implementation process, steps in the foregoing methods can be completed by using a hardware integrated logical circuit in the processor, or by using instructions in a form of software. The steps in the methods disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes steps in the foregoing methods in combination with hardware of the processor. To avoid repetition, details are not described herein again.

It should be noted that the processor in embodiments of this application may be an integrated circuit chip, and has a signal processing capability. In an implementation process, steps in the foregoing method embodiments can be completed by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. It may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in a decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes steps in the foregoing methods in combination with hardware of the processor.

According to the methods provided in embodiments of this application, this application further provides a computer program product. The computer program product includes a computer program, and when the computer program is run on a computer, the computer is enabled to perform the method in any one of the embodiments shown in FIG. 3 to FIG. 5.

According to the methods provided in embodiments of this application, this application further provides a computer-readable medium. The computer-readable medium stores a computer program, and when the computer program is run on a computer, the computer is enabled to perform the method in any one of the embodiments shown in FIG. 3 to FIG. 5.

According to the methods provided in embodiments of this application, this application further provides a communication system. The communication system includes the foregoing one or more terminal devices and the foregoing one or more access network devices.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state disc, SSD)), or the like.

The access network device and the terminal device in the foregoing apparatus embodiments correspond to the access network device or the terminal device in the method embodiments, and corresponding modules or units perform corresponding steps. For example, a receiving module and a sending module (a transceiver) perform receiving or sending steps in the method embodiments, and a step other than sending and receiving steps may be performed by a processing module (a processor). For a function of a specific module, refer to a corresponding method embodiment. There may be one or more processors.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with another system by using the signal).

A person of ordinary skill in the art may be aware that in combination with illustrative logical blocks (illustrative logical block) described in embodiments disclosed in this specification and steps (steps) may be implemented by electronic hardware or a combination of computer software and the electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate components may or may not be physically separate. Components displayed as units may or may not be physical units, that is, may be located in one position, or may be distributed on a plurality of network units. Some or all of the units may be selected based on actual requirements to achieve the objectives of the solutions of embodiments.

In addition, functional modules in embodiments of this application may be integrated into one processing module, or each of the modules may exist alone physically, or two or more modules are integrated into one module.

When the functions are implemented in a form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes a plurality of instructions for instructing a computer device (which may be a personal computer, a server, an access network device, or the like) to perform all or some of the steps in the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving, by a terminal device, a first message from an access network device, wherein the first message indicates the terminal device to perform handover to a target cell or to perform redirection to a target frequency;
determining, by the terminal device, that emergency services fallback needs to be performed, or the first message comprises second indication information, wherein the second indication information indicates voice fallback; and
if the handover to the target cell fails or the redirection to the target frequency fails, and the terminal device has an ongoing emergency service, searching, by the terminal device, for an acceptable cell or a suitable cell.

2. The method according to claim 1, wherein when the terminal device determines that the emergency services fallback needs to be performed, the first message comprises no second indication information, wherein the second indication information indicates the voice fallback.

3. The method according to claim 1 or 2, wherein the first message is one of the following: a mobility from new radio NR command message, a mobility from evolved universal terrestrial radio access E-UTRA command message, a radio resource control RRC release message, or a radio resource control RRC reconfiguration message.

4. The method according to any one of claims 1 to 3, wherein the method further comprises:
initiating, by the terminal device, the emergency services fallback, or initiating, by the terminal device, the emergency services fallback before receiving the first message.

5. The method according to any one of claims 1 to 4, wherein the method further comprises:
receiving, by an access stratum of the terminal device, third indication information from an application layer and/or a non-access stratum of the terminal device, wherein the third indication information indicates that the ongoing emergency service exists.

6. The method according to any one of claims 1 to 5, wherein the method further comprises:
querying, by the terminal device, whether the terminal device has the ongoing emergency service; and
if finding the ongoing emergency service, determining, by the terminal device, that the ongoing emergency service exists.

7. The method according to any one of claims 1 to 6, wherein the method further comprises:
if the acceptable cell or the suitable cell that is found is a cell supporting an emergency service, entering, by the terminal device, a radio resource control idle RRC_IDLE state; and/or
if the acceptable cell or the suitable cell that is found is a cell supporting an emergency service, performing, by the terminal device, the emergency service in the acceptable cell or the suitable cell.

8. The method according to any one of claims 1 to 6, wherein the method further comprises:
if finding no acceptable cell or no suitable cell, triggering, by the terminal device, a radio resource control RRC re-establishment procedure;
if finding no acceptable cell or no suitable cell, performing, by the terminal device, RRC re-establishment by using configuration information of a source cell;
if no acceptable cell or no suitable cell is found, sending, by the access stratum of the terminal device, fourth indication information to the application layer and/or the non-access stratum of the terminal device, wherein the fourth indication information indicates that no acceptable cell or no suitable cell is found; or
if finding no acceptable cell or no suitable cell, searching, by the terminal device, for a cell of another standard.

9. The method according to any one of claims 1 to 8, wherein the method further comprises:
sending, by the access stratum of the terminal device, fifth indication information to the application layer and/or the non-access stratum of the terminal device, wherein the fifth indication information indicates that the handover to the target cell fails or the redirection to the target frequency fails.

10. A communication method, wherein the method comprises:
receiving, by an access network device, an emergency fallback request; and
sending, by the access network device, a first message to a terminal device in response to the emergency fallback request, wherein
the first message comprises second indication information; or
the first message comprises no second indication information, wherein
the second indication information indicates voice fallback.

11. The method according to claim 10, wherein the first message is one of the following: a mobility from new radio NR command message, a mobility from evolved universal terrestrial radio access E-UTRA command message, a radio resource control RRC release message, or a radio resource control RRC reconfiguration message.

12. A communication apparatus, wherein the apparatus comprises:
a receiving module, configured to receive a first message from an access network device, wherein the first message indicates a terminal device to perform handover to a target cell or to perform redirection to a target frequency; and
a processing module, configured to determine that emergency services fallback needs to be performed, or the first message comprises second indication information, wherein the second indication information indicates voice fallback, wherein
the processing module is further configured to: if the handover to the target cell fails or the redirection to the target frequency fails, and the terminal device has an ongoing emergency service, search for an acceptable cell or a suitable cell.

13. The apparatus according to claim 12, wherein when the terminal device determines that the emergency services fallback needs to be performed, the first message comprises no second indication information, wherein the second indication information indicates the voice fallback.

14. The apparatus according to claim 12 or 13, wherein the first message is one of the following: a mobility from new radio NR command message, a mobility from evolved universal terrestrial radio access E-UTRA command message, a radio resource control RRC release message, or a radio resource control RRC reconfiguration message.

15. The apparatus according to any one of claims 12 to 14, wherein
the processing module is further configured to: initiate the emergency services fallback, or initiate the emergency services fallback before the first message is received.

16. The apparatus according to any one of claims 12 to 15, wherein
the processing module is further configured to receive third indication information from an application layer and/or a non-access stratum of the terminal device through an access stratum of the terminal device, wherein the third indication information indicates that the ongoing emergency service exists.

17. The apparatus according to any one of claims 12 to 16, wherein
the processing module is further configured to: query whether the terminal device has the ongoing emergency service; and if finding the ongoing emergency service, determine that the ongoing emergency service exists.

18. The apparatus according to any one of claims 12 to 17, wherein
the processing module is further configured to: if the acceptable cell or the suitable cell that is found is a cell supporting an emergency service, enter a radio resource control idle RRC_IDLE state; and/or
the processing module is further configured to: if the acceptable cell or the suitable cell that is found is a cell supporting an emergency service, perform the emergency service in the acceptable cell or the suitable cell.

19. The apparatus according to any one of claims 12 to 18, wherein the processing module is further configured to:
if finding no acceptable cell or no suitable cell, trigger a radio resource control RRC re-establishment procedure;
if finding no acceptable cell or no suitable cell, perform RRC re-establishment by using configuration information of a source cell;
if finding no acceptable cell or no suitable cell, send fourth indication information to the application layer and/or the non-access stratum of the terminal device through the access stratum of the terminal device, wherein the fourth indication information indicates that no acceptable cell or no suitable cell is found; or
if finding no acceptable cell or no suitable cell, search for a cell of another standard.

20. The apparatus according to any one of claims 12 to 19, wherein
the processing module is further configured to send fifth indication information to the application layer and/or the non-access stratum of the terminal device through the access stratum of the terminal device, wherein the fifth indication information indicates that the handover to the target cell fails or the redirection to the target frequency fails.

21. A communication apparatus, wherein the apparatus comprises:
a receiving module, configured to receive an emergency fallback request; and
a sending module, configured to send a first message to a terminal device in response to the emergency fallback request, wherein
the first message comprises second indication information; or
the first message comprises no second indication information, wherein
the second indication information indicates voice fallback.

22. The apparatus according to claim 21, wherein the first message is one of the following: a mobility from new radio NR command message, a mobility from evolved universal terrestrial radio access E-UTRA command message, a radio resource control RRC release message, or a radio resource control RRC reconfiguration message.

23. A communication apparatus, comprising a processor and a memory, wherein the memory is configured to store a computer program, and the processor runs the computer program, to enable the apparatus to perform the method according to any one of claims 1 to 9.

24. A communication apparatus, comprising a processor and a memory, wherein the memory is configured to store a computer program, and the processor runs the computer program, to enable the apparatus to perform the method according to claim 10 or 11.

25. A computer-readable storage medium, configured to store a computer program, wherein when the computer program is run on a computer, the computer is enabled to perform the method according to any one of claims 1 to 9.

26. A computer-readable storage medium, configured to store a computer program, wherein when the computer program is run on a computer, the computer is enabled to perform the method according to claim 10 or 11.

27. A computer program product, wherein the computer program product comprises a computer program, and when the computer program is run on a computer, the computer is enabled to perform the method according to any one of claims 1 to 9 or claim 10 or 11.
